# EUROPEAN PATENT SPECIFICATION

(11) **EP 3 858 504 B1**
(45) Date of publication and mention of the grant of the patent: **07.06.2023**
(21) Application number: 19877729.4
(22) Date of filing: 16.07.2019
(51) Int. Cl.: B21B 45/00

(54) **HEAT-RETAINING ROLLING EQUIPMENT**
WÄRMERÜCKHALTENDE WALZAUSRÜSTUNG
ÉQUIPEMENT DE LAMINAGE À RÉTENTION DE CHALEUR

(30) Priority: 01.11.2018 KR 20180133166
(43) Date of publication of application: 04.08.2021
(73) Proprietor: POSCO Co., Ltd, Pohang-si, Gyeongsangbuk-do 37859 (KR)
(72) Inventor: JUNG, Chang-Kyu, Pohang-si Gyeongsangbuk-do 37835 (KR); KIM, Yeo Eun, Gwangyang-si Jeollanam-do 57807 (KR); SONG, Gil-Ho, Pohang-si Gyeongsangbuk-do 37655 (KR); CHOE, Seok-Chan, Gwangyang-si Jeollanam-do 57803 (KR)
(74) Representative: Meissner Bolte Partnerschaft mbB
(86) International application number: PCT/KR2019/008786
(87) International publication number: WO 2020/091189

(56) References cited:
- EP-A1- 0 010 976
- BE-A- 893 565
- DE-C1- 3 508 060
- JP-A- H0 289 515
- JP-U- S54 169 104
- KR-A- 20130 043 116
- KR-A- 20140 054 831
- KR-B1- 100 775 487
- KR-B1- 101 568 612
- KR-U- 910 008 739
- US-B1- 6 463 652

## Description

### [Technical Field]

The present disclosure relates to a heat keeping apparatus for a rolling transfer line capable of enhancing a heat keeping effect by changing the shape of a heat keeping cover depending on the size of a material to be transferred.

### [Background Art]

A material for rolling is heated to approximately 1300 ~ 1400°C in a heating furnace and then transferred to a rough rolling process. As the heated material goes through the rough rolling process, a temperature thereof drops to approximately 900 ~ 1100°C due to the influence of cooling water or the atmosphere, and a length thereof increases, resulting in a temperature deviation in a longitudinal direction.

The material that has gone through the rough rolling process is transferred to a finish rolling process along a transfer line (roller table) of about 100 meters. In this process, an additional temperature drop occurs in the material due to air cooling. The temperature difference between a front end and a rear end of the material further increases based on a time point of rolling in the finish rolling process. In the finish rolling process, a time difference between a time point when the front end of the material is rolled and a time point when the rear end of the material is rolled reaches tens of seconds. Accordingly, a temperature when the rear end of the material is rolled is approximately 50°C lower than a temperature when the front end of the material is rolled. When the temperature at the rear end of the material drops excessively in the time point of rolling as above, the material of the rolled product may become uneven or twist.

In order to solve the above-described problem, a heat keeping apparatus may be installed on a rolling transfer line to keep heat of a material by covering the outside of the material being transferred with a heat keeping cover. In this heat keeping apparatus, the heat keeping cover reduces the temperature drop at the rear end of the material by keeping the heat of the material being transferred.

However, because it is not easy to change the size of the heat keeping cover in such a heat keeping apparatus, there is a limit to enhancing a heat keeping effect when the width or thickness of a material to be transferred is changed.

### [Citation List]

### [Patent Literature]

DE 35 08 060 C1: the document relates to heating hoods for hot-strip rolling mills, which are arranged behind furnaces and in front of the final rolling structures and consist of a belt guide surrounded with refractory linings. In order to be able to specifically influence the heat radiation of the conveyor belt, it is proposed to make the heat hoods electrically heatable and controllable, whereby means for temperature detection and for detecting the belt speed being provided, which are used for controlling the heating device.

### [Disclosure]

### [Technical Problem]

The present disclosure is directed to providing a rolling heat keeping apparatus capable of enhancing a heat keeping effect by changing the shape of a heat keeping cover depending on the size of a material to be transferred.

The present disclosure is directed to providing a rolling heat keeping apparatus capable of easy maintenance of a reflective panel and preventing bending of the reflective panel by allowing thermal deformation of the reflective panel.

### [Technical Solution]

An aspect of the present disclosure provides a heat keeping apparatus for a rolling transfer line including a heat keeping cover configured to cover and heat the outside of a material being transferred along the transfer line, wherein the heat keeping cover includes an upper cover part provided to cover an upper side of the material, first and second side cover parts provided to cover sides of the material and rotatably connected to opposite sides of the upper cover part, and at least one actuating part provided to adjust unfolding of the first or second side cover part by rotating the first or second side cover part.

The upper cover part may include an upper frame, a panel support device bufferably mounted on the upper frame, and an upper reflective panel supported by the panel support device to be replaceable and thermally deformable.

The heat keeping cover may be provided such that cross-sectional structures of the upper cover part and the first and second side cover parts have an arc shape.

The panel support device may include a rectangular panel frame provided to accommodate the upper reflective panel and having open upper and lower sides, and a plurality of coupling members installed on the panel frame to support a circumference of the upper reflective panel and allow thermal deformation of the upper reflective panel by elastic deformation.

The panel support device may include a rectangular panel frame provided to accommodate the upper reflective panel and having open upper and lower sides, and a plurality of buffer connection members provided to bufferably connect the panel frame to the upper frame.

The panel support device may further include a collision bumper installed below the panel frame to protect the upper reflective panel from collision of the material.

The collision bumper may be provided to protrude downward of the panel frame, extend in a transferring direction of the material, and have opposite ends fixed to the panel frame.

The panel frame may include one or more side slots formed in a size that allows the upper reflective panel to pass through for mounting and thermal deformation of the upper reflective panel.

Each of the plurality of coupling members may include a coupling groove detachably coupled to a circumference of the upper reflective panel, and an elastic deformation part extending from the coupling groove in a bent state and fixed to the panel frame to allow deformation of the upper reflective panel in a width direction.

Each of the plurality of buffer connection members may include a coil spring having one side connected to an edge of the panel frame and the other side connected to the upper frame.

The panel frame may include a reinforcing part provided to cross and connect upper sides or lower sides of the panel frame.

Each of the first and second side cover parts may include a side frame rotatably connected to the upper frame, and a side reflective panel supported by the side frame.

The upper frame and the side frame may be bent in an arc shape, and the side reflective panel may be fixed to the side frame in a state in which a reflection surface is bent to form an inner curved surface.

The at least one actuating part may include a first actuating part to rotate the first side cover part and a second actuating driving part to rotate the second side cover part.

The upper cover part may be raised when the first and second side cover parts are folded and may be lowered when the first and second side cover parts are unfolded.

### [Advantageous Effects]

In a heat keeping apparatus for a rolling transfer line according to an embodiment of the present disclosure, because upper reflective panels and side reflective panels are made of a material having a low emissivity and a high reflectance, most of the radiant energy radiated from the material can be quickly reflected toward the material, and because a heat keeping cover has an arc-shaped cross-sectional structure so that the reflected energy can be concentrated on the material, a heat keeping effect of the material can be enhanced compared to a conventional one.

In the heat keeping apparatus for the rolling transfer line according to an embodiment of the present disclosure, because a form of the heat keeping cover can be changed in a manner in which a first side cover part and a second side cover part are folded or unfolded depending on a size of the material to be transferred, the heat keeping effect of the material can be enhanced.

In the heat keeping apparatus for the rolling transfer line according to an embodiment of the present disclosure, because even when the material being transferred collides with a lower surface of the heat keeping cover, collision bumpers can protect the upper reflective panels, and a plurality of buffer connection members can absorb the impact, damage to the heat keeping cover can be prevented.

In the heat keeping apparatus for the rolling transfer line according to an embodiment of the present disclosure, because the upper reflective panels are supported by a plurality of elastically deformable coupling members, and side slots of panel frames allow thermal deformation of the upper reflective panels in a width direction, bending of the upper reflective panels can be prevented in spite of thermal deformation (elongation in the width direction) of the upper reflective panels.

In the heat keeping apparatus for the rolling transfer line according to an embodiment of the present disclosure, because the upper reflective panels can be mounted or separated through the side slots of the panel frames, and the plurality of coupling members can be elastically deformed and easily coupled, maintenance work such as replacement of the upper reflective panels can be easily performed.

### [Description of Drawings]

FIG. 1 is a perspective view showing rolling equipment to which a heat keeping apparatus according to an embodiment of the present disclosure is applied.
FIG. 2 is an exploded perspective view of a heat keeping cover of the heat keeping apparatus according to an embodiment of the present disclosure.
FIG. 3 is a front view of the heat keeping apparatus according to an embodiment of the present disclosure, showing a state in which first and second side cover parts are unfolded.
FIG. 4 is a front view of the heat keeping apparatus according to an embodiment of the present disclosure, showing a state in which the first and second side cover parts are folded.
FIG. 5 is a cross-sectional view of a heat keeping cover of the heat keeping apparatus according to an embodiment of the present disclosure.
FIG. 6 is a cross-sectional view of a first panel support device of the heat keeping apparatus according to an embodiment of the present disclosure.
FIG. 7 is a top perspective view of the first panel support device of the heat keeping apparatus according to an embodiment of the present disclosure.
FIG. 8 is a bottom perspective view of the first panel support device of the heat keeping apparatus according to an embodiment of the present disclosure.
FIG. 9 is a cross-sectional view of a second panel support device of the heat keeping apparatus according to an embodiment of the present disclosure.

### [Mode of the Disclosure]

Hereinafter, embodiments of the present disclosure will be described in detail with reference to the accompanying drawings.

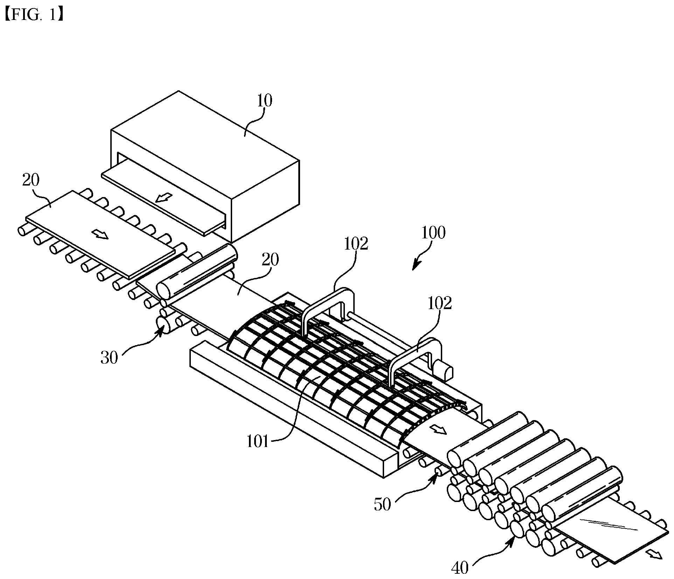

FIG. 1 is a perspective view showing rolling equipment to which a heat keeping apparatus according to an embodiment of the present disclosure is applied. Referring to FIG. 1, a rolling equipment includes a heating furnace 10 to heat a material for rolling, a roughing mill 30 to roll a material 20 heated in the heating furnace 10, a finishing mill 40 to roll the material 20 rough-rolled, and a transfer line 50 (roller table) to transfer the material 20 from the heating furnace 10 to the roughing mill 30 and transfer the material 20 from the roughing mill 30 to the finishing mill 40.

A heat keeping apparatus 100 may be installed on the transfer line 50 between the roughing mill 30 and the finishing mill 40. The heat keeping apparatus 100 covers the outside of the material 20 to be transferred to the finishing mill 40 through the roughing mill 30 to prevent an excessive drop in a temperature of the material 20 during a transfer process. This is to reduce the temperature drop of the material 20 entering the finishing mill 40 so that a rear end of the material 20 may be rolled satisfactorily in the finishing mill 40.

The present embodiment illustrates that the heat keeping apparatus 100 is installed on the transfer line 50 between the roughing mill 30 and the finishing mill 40, but an installation location of the heat keeping apparatus 100 is not limited thereto. The heat keeping apparatus 100 may be installed at another location of the rolling equipment to prevent temperature drop of the material 20.

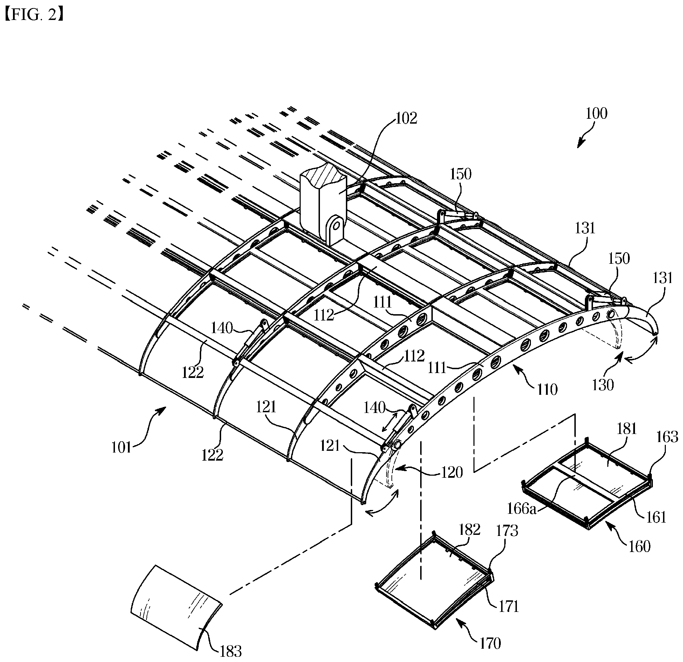

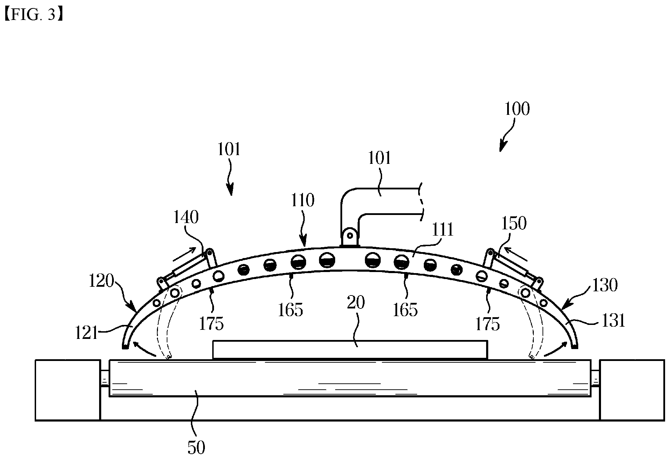

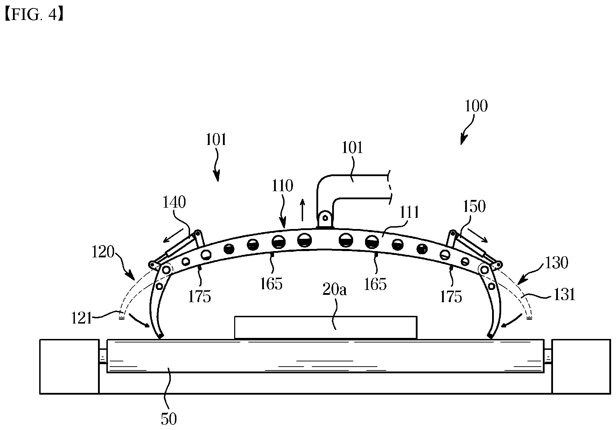

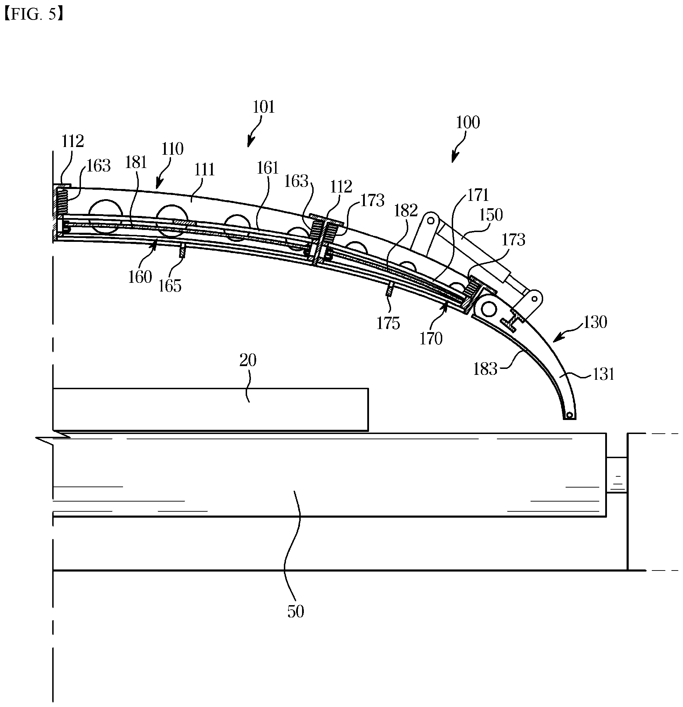

FIG. 2 is an exploded perspective view of a heat keeping cover of the heat keeping apparatus, and FIGS. 3 and 4 are front views of the heat keeping apparatus, showing states in which first and second side cover parts are unfolded and folded, respectively. FIG. 5 is a cross-sectional view of a heat keeping cover.

Referring to FIGS. 2 to 4, the heat keeping apparatus 100 may include a heat keeping cover 101 installed above the transfer line 50 to cover the outside of the material 20 being transferred along the transfer line 50 to keep heat of the material 20, and an opening/closing device 102 capable of raising and lowering the heat keeping cover 101 and opening the heat keeping cover 101 when necessary.

The heat keeping cover 101 includes an upper cover part 110 to cover an upper portion of the material 20, a first side cover part 120 and a second side cover part 130 rotatably connected to opposite sides of the upper cover part 110, respectively, to cover opposite sides of the material 20, a first actuating part 140 to adjust an unfolding of the first side cover part 120 by rotating the first side cover part 120, and a second actuating part 150 to adjust an unfolding of the second side cover part 130 by rotating the second side cover part 130.

Referring to FIG. 3, the upper cover part 110 and the first and second side cover parts 120 and 130 each have a cross-sectional structure in an arc shape. Therefore, the heat keeping cover 101 may form a tunnel having an arc-shaped cross-sectional structure by combining the upper cover part 110, the first side cover part 120, and the second side cover part 130 with each other. The tunneltype heat keeping cover 101 may enhance a heat keeping effect of the material 20 by reflecting the radiant energy radiated from the material 20 toward the material 20 again.

The first side cover part 120 and the second side cover part 130 may be rotated to unfold to the opposite sides when the material 20 having a wide width is transferred as shown in FIG. 3 to widen a heat keeping area, and may be rotated to fold inward when a material 20a having a narrow width is transferred as shown in FIG. 4 to narrow the heat keeping area. That is, the heat keeping effect of the materials 20 and 20a may be enhanced by changing the shape of the heat keeping cover 101 to correspond to the size of the materials 20 and 20a to be transferred. When the first and second side cover parts 120 and 130 are folded, the upper cover part 110 may be raised, and when the first and second side cover parts 120 and 130 are unfolded, the upper cover part 110 may be lowered.

The first and second actuating parts 140 and 150 may be hydraulic cylinders having one side thereof connected to the upper cover part 110 and the other side thereof connected to the first or second side cover part 120 or 130 to adjust an angle by rotating the first or second side cover part 120 or 130 by expansion and contraction.

The present embodiment illustrates the first actuating part 140 and the second actuating part 150 to adjust an angle by driving the first side cover part 120 and the second side cover part 130, respectively, but the first side cover part 120 and the second side cover part 130 may be operated simultaneously by one actuating part. For example, by transmitting power from one actuating part installed above the upper cover part 110 to the first and second side cover parts 120 and 130, the first and second side cover parts 120 and 130 may rotate simultaneously to be folded or unfolded.

Referring to FIGS. 2, 3, and 5, the upper cover part 110 may include an upper frame 111 formed in an arc shape, a first panel support device 160 and a second panel support device 170 bufferably mounted below the upper frame 111, and a first upper reflective panel 181 and a second upper reflective panel 182 supported by the first and second panel support devices 160 and 170 to be replaceable and thermally deformable.

The first side cover part 120 and the second side cover part 130 may include side frames 121 and 131 of an arc shape connected to ends of the upper frame 111, and side reflective panels 183 coupled to lower sides of the side frames 121 and 131, respectively.

As shown in FIG. 2, a plurality of the upper frames 111 may be disposed to be spaced apart from each other in a transferring direction of the material 20 and may be interconnected by a plurality of connection frames 112 extending in a direction of crossing the upper frames 111. Like the upper frame 111, a plurality of the side frames 121 and 131 may also be interconnected by a plurality of connection frames 122 in a state of being disposed to be spaced apart from each other in the transferring direction of the material 20. One end of the side frames 121 and 131 of the first and second side cover parts 120 and 130 is rotatably connected to both ends of the upper frame 111.

As shown in FIG. 5, the first panel support device 160 and the second panel support device 170 are sequentially installed below the upper frame 111 in a lateral direction from the center thereof. Also, the first and second panel support devices 160 and 170 are continuously installed in a longitudinal direction of the heat keeping cover 101 in the same manner. FIG. 5 shows only one side of the heat keeping cover 101, but the first and second panel support devices 160 and 170 may be installed to be symmetrical on both sides of the heat keeping cover 101.

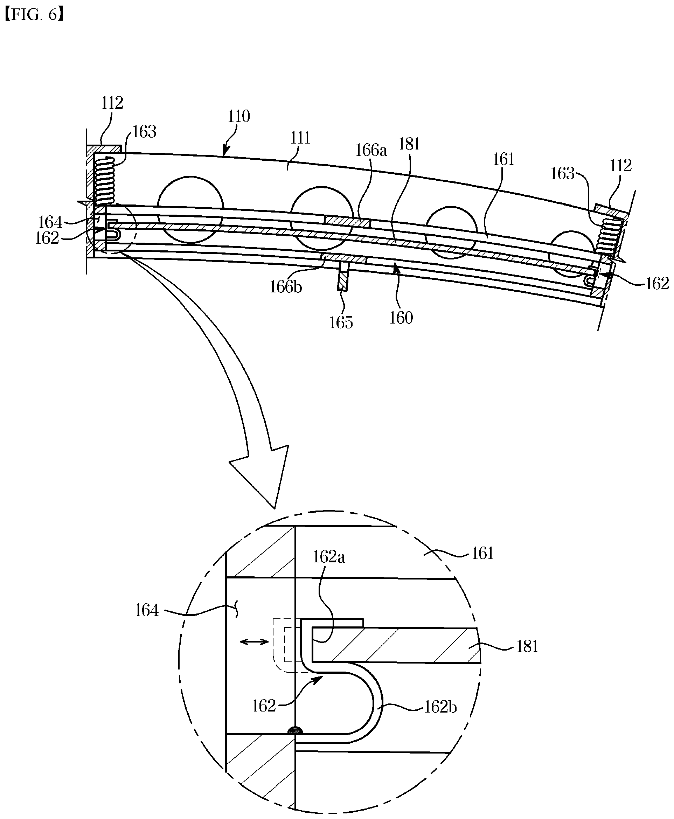

Referring to FIGS. 6 to 8, the first panel support device 160 may include a rectangular panel frame 161 accommodating the first upper reflective panel 181 and having open upper and lower sides, a plurality of coupling members 162 installed on the panel frame 161 to support a circumference of the first upper reflective panel 181 and allow thermal deformation of the first upper reflective panel 181 by elastic deformation, and a plurality of buffer connection members 163 to bufferably connect the panel frame 161 to the upper frame 111.

The first upper reflective panel 181 may have a rectangular panel shape smaller than the panel frame 161 to be accommodated in the panel frame 161. The first upper reflective panel 181 may be made of a material such as aluminum, aluminum alloy, zinc oxide, stainless steel that may reflect most of the radiant energy because an emissivity of radiant energy is very low.

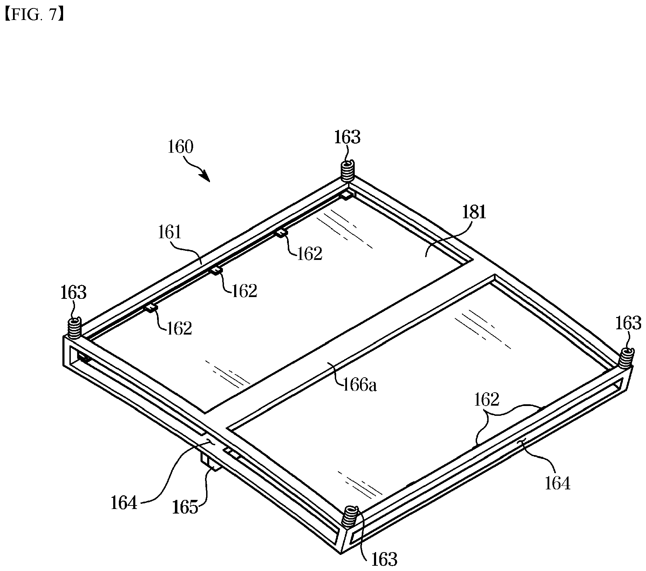

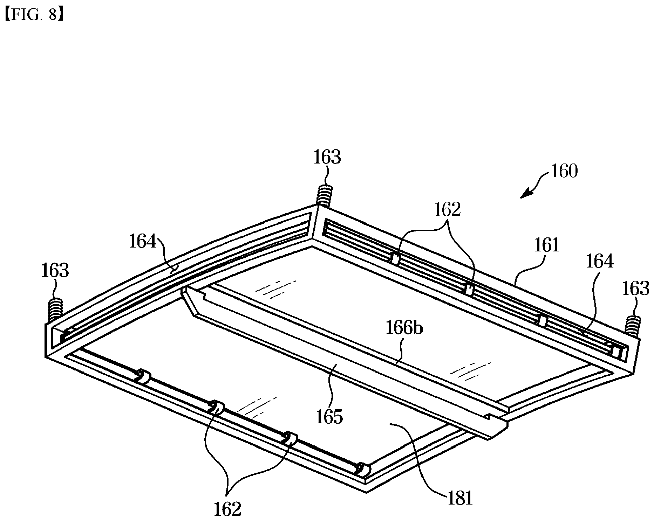

As shown in FIGS. 7 and 8, the panel frame 161 includes one or more side slots 164 formed in a size through which the first upper reflective panel 181 may pass. The present embodiment illustrates that the side slot 164 is formed on each of four sides of the panel frame 161. The side slots 164 allow the first upper reflective panel 181 to be mounted from the sides of the panel frame 161 and may prevent the first upper reflective panel 181 from being bent by receiving deformation generated when the first upper reflective panel 181 is stretched in a width direction due to thermal deformation.

As shown in FIG. 6, the plurality of coupling members 162 may be installed in a state of being spaced apart from each other on the panel frame 161 to support the circumference of the first upper reflective panel 181. Each of the coupling members 162 may be provided by bending a leaf spring. Each of the coupling members 162 may include a coupling groove 162a detachably coupled to the circumference of the first upper reflective panel 181, and an elastic deformation part 162b extending from the coupling groove 162a in a bent state and fixed to the panel frame 161 to allow deformation of the first upper reflective panel 181 in the width direction. The circumference of the first upper reflective panel 181 may be maintained in a state of being spaced apart from the panel frame 161 by being supported by the plurality of coupling members 162.

As shown in FIGS. 6 and 7, each of the plurality of buffer connection members 163 may be a coil spring having one side connected to an upper edge of the panel frame 161 and the other side connected to the upper frame 111. The present embodiment illustrates a coil spring, but the plurality of buffer connection members 163 may be plate springs capable of elastic deformation.

Referring to FIGS. 6 and 8, the first panel support device 160 may include a collision bumper 165 installed below the panel frame 161 to protect the first upper reflective panel 181 from collision of the material 20. The collision bumper 165 may be provided to protrude downward of the panel frame 161, extend long in the transferring direction of the material 20, and have opposite ends fixed to a lower end of the panel frame 161.

Referring to FIGS. 7 and 8, the panel frame 161 may include reinforcing parts 166a and 166b provided to connect upper or lower sides of the panel frame 161 to each other. The reinforcing parts 166a and 166b may reinforce the panel frame 161 by crossing and connecting the upper or lower sides of the panel frame 161 in the direction in which the material 20 is transferred.

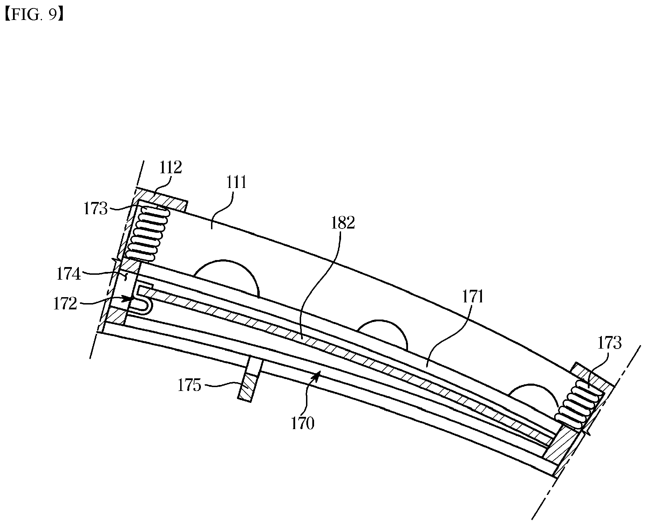

Referring to FIGS. 5 and 9, the second panel support device 170 may also be provided similarly to the first panel support device 160. The second panel support device 170 may also include a rectangular panel frame 171 to accommodate and support the second upper reflective panel 182, a plurality of coupling members 172, a plurality of buffer connection members 173, and a collision bumper 175. However, the second panel support device 170 may be provided such that a thickness of the panel frame 171 gradually decreases in a lateral direction so that the second panel support device 170 may be mounted corresponding to a curvature of the arc-shaped upper frame 111. The second upper reflective panel 182 may also be made of the same material as the first upper reflective panel 181 and installed on the panel frame 171 in a similar manner to the first upper reflective panel 181.

Referring to FIGS. 2 and 5, the side reflective panels 183 installed on the first and second side cover parts 120 and 130 may be directly fixed to the side frames 121 and 131 in a state in which a reflective surface thereof is bent to form an inner curved surface. Because the first and second side cover parts 120 and 130 have a relatively low risk of collision with the material 20, the side reflective panels 183 may be directly fixed to the side frames 121 and 131 by fastening screws or the like.

The side reflective panels 183 may also be made of the same material as the first and second upper reflective panels 181 and 182 and may be easily replaced as needed because the side reflective panels 183 are coupled by fastening fixing screws.

The heat keeping cover 101 as above may quickly reflect most of the radiant energy radiated from the material toward the material because the plurality of first and second upper reflective panels 181 and 182 and the plurality of side reflective panels 183 are made of a material having a low emissivity and a high reflectance. In addition, because the heat keeping cover 101 has an arc-shaped cross-sectional structure so that the reflected energy may be concentrated on the material, the heat keeping effect of the material 20 may be enhanced compared to a conventional one.

In the heat keeping apparatus 100 of the present embodiment, because the form of the heat keeping cover 101 may be changed in a manner in which the first side cover part 120 and the second side cover part 130 are folded or unfolded depending on the size of the material 20 to be transferred, the heat keeping effect of the material 20 may be enhanced.

In the heat keeping apparatus 100 of the present embodiment, because even when the material 20 being transferred collides with a lower surface of the heat keeping cover 101, the collision bumpers 165 and 175 may protect the first and second upper reflective panels 181 and 182, and the plurality of buffer connection members 163 and 173 may absorb the impact, damage to the heat keeping cover 101 may be prevented.

In the heat keeping apparatus 100 of the present embodiment, because the first and second upper reflective panels 181 and 182 are supported by the plurality of elastically deformable coupling members 162 and 172, and the side slots 164 and 174 of the panel frames 161 and 171 allow thermal deformation of the first and second upper reflective panels 181 and 182 in the width direction, bending of the first and second upper reflective panels 181 and 182 may be prevented in spite of thermal deformation (elongation in the width direction) of the first and second upper reflective panels 181 and 182.

In the heat keeping apparatus 100 of the present embodiment, because the first or second upper reflective panel 181 or 182 may be mounted or separated through the side slots 164 and 174 of the panel frames 161 and 171, and the plurality of coupling members 162 and 172 may be elastically deformed and easily coupled, maintenance work such as replacement of the first and second upper reflective panels 181 and 182 may be easily performed.

## Claims

1. A heat keeping apparatus (100) for a rolling transfer line (50) comprising:
a heat keeping cover (101) configured to cover and heat the outside of a material being transferred along the transfer line,
wherein the heat keeping cover comprises:
an upper cover part (110) provided to cover an upper side of the material (20); **characterized by**
first and second side cover parts (120, 130) provided to cover sides of the material and rotatably connected to opposite sides of the upper cover part; and
at least one actuating part (140, 150) provided to adjust unfolding of the first or second side cover part by rotating the first or second side cover part.

2. The heat keeping apparatus according to claim 1, wherein
the upper cover part (110) comprises an upper frame (111), a panel support device (160, 170) bufferably mounted on the upper frame, and an upper reflective panel supported by the panel (181, 182) support device to be replaceable and thermally deformable.

3. The heat keeping apparatus according to claim 1, wherein
the heat keeping cover (101) is provided such that cross-sectional structures of the upper cover part and the first and second side cover parts have an arc shape.

4. The heat keeping apparatus according to claim 2, wherein
the panel support device (160, 170) comprises:
a rectangular panel frame (161, 171) provided to accommodate the upper reflective panel (181, 182) and having open upper and lower sides; and
a plurality of coupling members (162, 172) installed on the panel frame to support a circumference of the upper reflective panel and allow thermal deformation of the upper reflective panel by elastic deformation.

5. The heat keeping apparatus according to claim 2, wherein
the panel support device (160, 170) comprises:
a rectangular panel frame (161, 171) provided to accommodate the upper reflective panel (181, 182) and having open upper and lower sides; and
a plurality of buffer connection members (163, 173) provided to bufferably connect the panel frame to the upper frame.

6. The heat keeping apparatus according to claim 4, wherein
the panel support device (160, 170) further comprises a collision bumper (165, 175) installed below the panel frame (161, 171) to protect the upper reflective panel (181, 182) from collision of the material.

7. The heat keeping apparatus according to claim 6, wherein
the collision bumper (165, 175) is provided to protrude downward of the panel frame (161, 171), extend in a transferring direction of the material (20), and have opposite ends fixed to the panel frame.

8. The heat keeping apparatus according to claim 4, wherein
the panel frame (161, 171) comprises one or more side slots (164, 174) formed in a size that allows the upper reflective panel (181, 182) to pass through for mounting and thermal deformation of the upper reflective panel.

9. The heat keeping apparatus according to claim 4, wherein
each of the plurality of coupling members (162) comprises a coupling groove (162a) detachably coupled to a circumference of the upper reflective panel (181), and an elastic deformation part (162b) extending from the coupling groove in a bent state and fixed to the panel frame to allow deformation of the upper reflective panel in a width direction.

10. The heat keeping apparatus according to claim 5, wherein
each of the plurality of buffer connection members (163, 173) comprises a coil spring having one side connected to an edge of the panel frame and the other side connected to the upper frame.

11. The heat keeping apparatus according to claim 4, wherein
the panel frame (161) comprises a reinforcing part (166a, 166b) provided to cross and connect upper sides or lower sides of the panel frame.

12. The heat keeping apparatus according to claim 2, wherein
each of the first and second side cover parts (120, 130) comprises a side frame (121, 131) rotatably connected to the upper frame, and a side reflective panel (183) supported by the side frame.

13. The heat keeping apparatus according to claim 12, wherein
the upper frame (111) and the side frame (121,131) are bent in an arc shape, and
the side reflective panel (183) is fixed to the side frame in a state in which a reflection surface is bent to form an inner curved surface.

14. The heat keeping apparatus according to claim 1, wherein
the at least one actuating part comprises a first actuating part (140) to rotate the first side cover part (120) and a second actuating part (150) to rotate the second side cover part (130).

## Patentansprüche

1. Wärmehaltevorrichtung (100) für eine Walztransferstraße (50), umfassend:
eine wärmehaltende Abdeckung (101), die dafür ausgelegt ist, die Außenseite eines Materials, das entlang der Transferstraße transferiert wird, abzudecken und zu erwärmen,
wobei die wärmehaltende Abdeckung Folgendes umfasst:
einen oberen Abdeckungsteil (110), der vorgesehen ist, um eine Oberseite des Materials (20) abzudecken; **gekennzeichnet durch**
einen ersten und einen zweiten seitlichen Abdeckungsteil (120, 130), die vorgesehen sind, um die Seiten des Materials abzudecken und die drehbar mit gegenüberliegenden Seiten des oberen Abdeckungsteils verbunden sind; und
wenigstens einen Betätigungsteil (140, 150), der vorgesehen ist, um das Aufklappen des ersten oder zweiten seitlichen Abdeckungsteils durch Drehen des ersten oder zweiten seitlichen Abdeckungsteils einzustellen.

2. Wärmehaltevorrichtung nach Anspruch 1, wobei
der obere Abdeckungsteil (110) Folgendes umfasst: einen oberen Rahmen (111), eine Plattenträgereinrichtung (160, 170), die pufferbar an dem oberen Rahmen montiert ist, und eine obere reflektierende Platte, die von der Trägereinrichtung für die Platte (181, 182) getragen wird, um austauschbar und wärmeverformbar zu sein.

3. Wärmehaltevorrichtung nach Anspruch 1, wobei
die wärmehaltende Abdeckung (101) derart vorgesehen ist, dass Querschnittstrukturen des oberen Abdeckungsteils und des ersten und zweiten seitlichen Abdeckungsteils eine Bogenform aufweisen.

4. Wärmehaltevorrichtung nach Anspruch 2, wobei
die Plattenträgereinrichtung (160, 170) Folgendes umfasst:
einen rechteckigen Plattenrahmen (161, 171), der vorgesehen ist, um die obere reflektierende Platte (181, 182) aufzunehmen, und der offene Ober- und Unterseiten aufweist; und
eine Vielzahl von Kopplungselementen (162, 172), die an dem Plattenrahmen angebracht sind, um einen Umfang der oberen reflektierenden Platte zu tragen und eine Wärmeverformung der oberen reflektierenden Platte durch elastische Verformung zu ermöglichen.

5. Wärmehaltevorrichtung nach Anspruch 2, wobei
die Plattenträgereinrichtung (160, 170) Folgendes umfasst:
einen rechteckigen Plattenrahmen (161, 171), der vorgesehen ist, um die obere reflektierende Platte (181, 182) aufzunehmen, und der offene Ober- und Unterseiten aufweist; und
eine Vielzahl von Pufferverbindungselementen (163, 173), die vorgesehen sind, um den Plattenrahmen pufferbar mit dem oberen Rahmen zu verbinden.

6. Wärmehaltevorrichtung nach Anspruch 4, wobei
die Plattenträgereinrichtung (160, 170) ferner einen Stoßfänger (165, 175) umfasst, der unter dem Plattenrahmen (161, 171) angebracht ist, um die obere reflektierende Platte (181, 182) vor einem Zusammenstoß mit dem Material zu schützen.

7. Wärmehaltevorrichtung nach Anspruch 6, wobei
der Stoßfänger (165, 175) so vorgesehen ist, dass er von dem Plattenrahmen (161, 171) nach unten vorragt, sich in einer Transferrichtung des Materials (20) erstreckt und gegenüberliegende Enden aufweist, die an dem Plattenrahmen befestigt sind.

8. Wärmehaltevorrichtung nach Anspruch 4, wobei
der Plattenrahmen (161, 171) einen oder mehrere Seitenschlitze (164, 174) umfasst, die in einer Größe ausgebildet sind, die es der oberen reflektierenden Platte (181, 182) ermöglicht, zur Montage und Wärmeverformung der oberen reflektierenden Platte hindurchzugehen.

9. Wärmehaltevorrichtung nach Anspruch 4, wobei
jedes der Vielzahl von Kopplungselementen (162) Folgendes umfasst: eine Kopplungsnut (162a), die lösbar mit einem Umfang der oberen reflektierenden Platte (181) gekoppelt ist, und einen elastischen Verformungsteil (162b), der sich in einem gebogenen Zustand ausgehend von der Kopplungsnut erstreckt und an dem Plattenrahmen befestigt ist, um eine Verformung der oberen reflektierenden Platte in einer Breitenrichtung zu ermöglichen.

10. Wärmehaltevorrichtung nach Anspruch 5, wobei
jedes der Vielzahl von Pufferverbindungselementen (163, 173) eine Spiralfeder umfasst, deren eine Seite mit einer Kante des Plattenrahmens verbunden ist und deren andere Seite mit dem oberen Rahmen verbunden ist.

11. Wärmehaltevorrichtung nach Anspruch 4, wobei
der Plattenrahmen (161) einen Verstärkungsteil (166a, 166b) umfasst, der vorgesehen ist, um die Oberseiten oder Unterseiten des Plattenrahmens zu kreuzen und zu verbinden.

12. Wärmehaltevorrichtung nach Anspruch 2, wobei
jeder von dem ersten und dem zweiten seitlichen Abdeckungsteil (120, 130) Folgendes umfasst: einen seitlichen Rahmen (121, 131), der drehbar mit dem oberen Rahmen verbunden ist, und eine seitliche reflektierende Platte (183), die von dem seitlichen Rahmen getragen wird.

13. Wärmehaltevorrichtung nach Anspruch 12, wobei
der obere Rahmen (111) und der seitliche Rahmen (121, 131) bogenförmig gebogen sind, und
die seitliche reflektierende Platte (183) in einem Zustand, in dem eine Reflexionsfläche gebogen ist, um eine innere gekrümmte Fläche zu bilden, an dem seitlichen Rahmen befestigt ist.

14. Wärmehaltevorrichtung nach Anspruch 1, wobei
der wenigstens eine Betätigungsteil einen ersten Betätigungsteil (140) zum Drehen des ersten seitlichen Abdeckungsteils (120) und einen zweiten Betätigungsteil (150) zum Drehen des zweiten seitlichen Abdeckungsteils (130) umfasst.

## Revendications

1. Appareil gardant la chaleur (100) pour une ligne de transfert de laminage (50) comprenant :
un couvercle gardant la chaleur (101) configuré pour couvrir et chauffer l'extérieur d'un matériau qui est en cours de transfert le long de la ligne de transfert,
dans lequel le couvercle gardant la chaleur comprend :
une partie de couvercle supérieure (110) prévue pour couvrir un côté supérieur du matériau (20) ; **caractérisé par**
des première et seconde parties de couvercle de côté (120, 130) prévues pour couvrir des côtés du matériau et raccordées en rotation à des côtés opposés de la partie de couvercle supérieure ; et
au moins une partie d'actionnement (140, 150) prévue pour ajuster le dépliage de la première ou seconde partie de couvercle de côté par rotation de la première ou seconde partie de couvercle de côté.

2. Appareil gardant la chaleur selon la revendication 1, dans lequel
la partie de couvercle supérieure (110) comprend un châssis supérieur (111), un dispositif de support de panneau (160, 170) monté en tampon sur le châssis supérieur, et un panneau réfléchissant supérieur supporté par le dispositif de support de panneau (181, 182) pour être remplaçable et thermiquement déformable.

3. Appareil gardant la chaleur selon la revendication 1, dans lequel
le couvercle gardant la chaleur (101) est prévu de sorte que des structures en coupe de la partie du couvercle supérieure et des première et seconde parties de couvercle de côté aient une forme d'arc.

4. Appareil gardant la chaleur selon la revendication 2, dans lequel
le dispositif de support de panneau (160, 170) comprend :
un châssis de panneau (161, 171) rectangulaire prévu pour accueillir le panneau réfléchissant supérieur (181, 182) et ayant des côtés supérieur et inférieur ouverts ; et
une pluralité d'organes de couplage (162, 172) installés sur le châssis du panneau pour supporter une circonférence du panneau réfléchissant supérieur et permettre une déformation thermique du panneau réfléchissant supérieur par déformation élastique.

5. Appareil gardant la chaleur selon la revendication 2, dans lequel
le dispositif de support de panneau (160, 170) comprend :
un châssis de panneau (161, 171) rectangulaire prévu pour accueillir le panneau réfléchissant supérieur (181, 182) et ayant des côtés supérieur et inférieur ouverts ; et
une pluralité d'organes de raccordement tampon (163, 173) prévus pour raccorder en tampon le châssis de panneau au châssis supérieur.

6. Appareil gardant la chaleur selon la revendication 4, dans lequel
le dispositif de support de panneau (160, 170) comprend en outre un butoir anticollision (165, 175) installé sous le châssis de panneau (161, 171) pour protéger le panneau réfléchissant supérieur (181, 182) vis-à-vis d'une collision du matériau.

7. Appareil gardant la chaleur selon la revendication 6, dans lequel
le butoir anticollision (165, 175) est prévu pour faire saillie vers le bas du châssis de panneau (161, 171), et s'étendre dans une direction de transfert du matériau (20), et avoir des extrémités opposées fixées au châssis de panneau.

8. Appareil gardant la chaleur selon la revendication 4, dans lequel
le châssis de panneau (161, 171) comprend une ou plusieurs fentes de côté (164, 174) formées en une taille qui permet au panneau réfléchissant supérieur (181, 182) de passer au travers pour le montage et la déformation thermique du panneau réfléchissant supérieur.

9. Appareil gardant la chaleur selon la revendication 4, dans lequel
chacun de la pluralité d'organes de couplage (162) comprend une rainure de couplage (162a) couplée amovible à une circonférence du panneau réfléchissant supérieur (181), et une partie de déformation élastique (162b) s'étendant depuis la rainure de couplage dans un état fléchi et fixée au châssis de panneau pour permettre une déformation du panneau réfléchissant supérieur dans un sens de la largeur.

10. Appareil gardant la chaleur selon la revendication 5, dans lequel
chacun de la pluralité d'organes de raccordement tampon (163, 173) comprend un ressort hélicoïdal ayant un côté raccordé à un bord du châssis de panneau et l'autre côté raccordé au châssis supérieur.

11. Appareil gardant la chaleur selon la revendication 4, dans lequel
le châssis de panneau (161) comprend une partie de renforcement (166a, 166b) prévue pour croiser et raccorder des côtés supérieurs ou des côtés inférieurs du châssis de panneau.

12. Appareil gardant la chaleur selon la revendication 2, dans lequel
chacune des première et seconde parties de couvercle de côté (120, 130) comprend un châssis de côté (121, 131) raccordé en rotation au châssis supérieur, et un panneau réfléchissant de côté (183) supporté par le châssis de côté.

13. Appareil gardant la chaleur selon la revendication 12, dans lequel
le châssis supérieur (111) et le châssis de côté (121, 131) sont fléchis en une forme d'arc, et
le panneau réfléchissant de côté (183) est fixé au châssis de côté dans un état où une surface de réflexion est fléchie pour former une surface courbée interne.

14. Appareil gardant la chaleur selon la revendication 1, dans lequel
l'au moins une partie d'actionnement comprend une première partie d'actionnement (140) pour mettre en rotation la première partie de couvercle de côté (120) et une seconde partie d'actionnement (150) pour mettre en rotation la seconde partie du couvercle de côté(130).
